# EUROPEAN PATENT APPLICATION

(11) **EP 2 117 105 A1**
(43) Date of publication of application: **11.11.2009**
(21) Application number: 08710424.6
(22) Date of filing: 19.02.2008
(51) Int. Cl.: H02K 44/04, F24F 13/22

(54) **LIQUID FEED DEVICE AND AIR CONDITIONING DEVICE**

(30) Priority: 21.02.2007 JP 2007040878
(71) Applicant: Daikin Industries, Ltd., Osaka 530-8323 (JP)
(72) Inventor: MASUDA, Kenji, Sakai-shi Osaka 591-8511 (JP)
(74) Representative: HOFFMANN EITLE
(86) International application number: PCT/JP2008/000271
(87) International publication number: WO 2008/102549

(57) **Abstract**

A nozzle electrode (44) is connected to a drain pan (30), with the other end of the nozzle electrode (44) pointing upward and open. A ring electrode (45) is positioned so as to face the nozzle electrode (44). When a positive voltage is applied to the nozzle electrode (44), an electric field is created at a location close to the tip of the nozzle electrode (44). As a result, a drain water is sprayed from the nozzle electrode (44) as positively-charged small droplets. The sprayed droplets are discharged to the outside of the system through a flow-in pipe (51) and a flow-out pipe (53).

## Description

### Technical Field

The present invention relates to a liquid transfer device for transferring a liquid in a reservoir, and an air conditioner including the liquid transfer device.

### Background Art

Liquid transfer devices for transferring a liquid have conventionally been used in various fields. As a liquid transfer device of this type, Patent Document 1 discloses a drain pump for discharging a drain water of a room air conditioner.

The air conditioner of Patent Document 1 includes a so-called ceiling-mounted indoor unit. An indoor heat exchanger through which air passes, a drain pan (a reservoir) provided under the indoor heat exchanger, and a drain pump (a liquid transfer device) provided in the drain pan are accommodated in the casing of the indoor unit.

Room air is drawn into the casing and passes through the indoor heat exchanger during the cooling operation of the air conditioner. In the indoor heat exchanger, a refrigerant which flows in the indoor heat exchanger absorbs heat from the air and evaporates, thereby cooling the air. The cooled air is supplied to the indoor space through a plurality of air outlets. Here, when the air is cooled by the indoor heat exchanger, moisture in the air is condensed and results in a condensed water. The condensed water falls in drops and is collected in the drain pan. The condensed water stored in the drain pan is transferred upwardly by the drain pump, and is discharged to the outside of the casing through a predetermined pipe.
Patent Document 1: Japanese Laid-Open Patent Application Publication No. 2005-140452

### Disclosure of Invention

### Problems to be solved by the invention

In general, the drain pump disclosed in Patent Document 1 is actuated by a motor, and therefore, the operational sound tends to be relatively large. Thus, the operational sound of the drain pump may be a noise for people in the room. In addition, the drain pump consumes a relatively large amount of power due to the motor actuation, which is undesirable in terms of energy saving.

The present invention was made in view of the above, and is advantageous in providing a liquid transfer device with small operational sound and low power consumption, and an air conditioner including the liquid transfer device.

### Means for solving the problems

The first aspect of the present invention is a liquid transfer device for transferring a liquid in a reservoir (30). The liquid transfer device includes a tubular first electrode (44) whose one end communicates with the reservoir (30) and whose other end is open, a second electrode (45) provided at a location corresponding to the other end of the first electrode (44), and a power source (60) for applying an potential difference between the first electrode (44) and the second electrode (45), thereby creating an electric field at a location close to the other end of the first electrode (44), wherein the liquid in the reservoir (30) is sprayed from the other end of the first electrode (44) due to the electric field, and thereby the liquid is transferred.

According to the first aspect of the present invention, the reservoir (30) for storing a liquid and the first electrode (44) communicate with each other. In other words, the liquid in the reservoir (30) can be supplied to the inside of the first electrode (44). When a potential difference is applied between the first electrode (44) and the second electrode (45) from the power source (60), an electric field is created at a location close to the other end (i.e., open end) of the first electrode (44). As a result, the liquid in the open end of the first electrode (44) is polarized, and part of the liquid is pulled apart from the air-liquid interface as small droplets. The droplets of the liquid are attracted to the second electrode (45) due to Coulomb force, and are sprayed while keeping the form of small droplets. As a result, the droplets of the liquid are transferred in a predetermined direction while suspended in air.

The second aspect of the present invention is that in the liquid transfer device of the first aspect, a positive voltage or a negative voltage is applied to the first electrode (44) from the power source (60), and the second electrode (45) is electrically grounded.

According to the second aspect of the present invention, a positive voltage or a negative voltage is applied to the first electrode (44) from the power source (60). As a result, positively- or negatively-charged small droplets are transferred from the open end of the first electrode (44) by being attracted to the second electrode (45) which is grounded.

The third aspect of the present invention is that the liquid transfer device of the second aspect includes a flow-in side guide member (51) for guiding the liquid sprayed from the first electrode (44).

According to the third aspect of the present invention, the liquid sprayed from the first electrode (44) is transferred in a predetermined direction such that the liquid moves along a flow-in side guide member (51) while suspended in air. Thus, the flow-in side guide member (51) can prevent the sprayed liquid from dispersing, and allows the liquid to be reliably transferred in a predetermined direction.

The fourth aspect of the present invention is that in the liquid transfer device of the third aspect, a voltage having a same electric potential as the voltage applied to the first electrode (44) is applied to the flow-in side guide member (51).

According to the fourth aspect of the present invention, a voltage having a same electric potential as the voltage applied to the first electrode (44) is applied to the flow-in side guide member (51). Specifically, if a positive voltage is applied to the first electrode (44), a positive voltage is applied to the flow-in side guide member (51), as well. In this case, when a positively-charged liquid is sprayed from the first electrode (44), the liquid is affected by Coulomb force in a direction separating from the wall surface of the flow-in side guide member (51). Thus, the liquid is guided to the flow-in side guide member (51) and transferred while keeping the form of small droplets without adhering to the wall of the flow-in side guide member (51).

The fifth aspect of the present invention is that the liquid transfer device of the third aspect or the fourth aspect includes a flow-out side guide member (53) which forms a flow path for guiding the liquid that flows out of the flow-in side guide member (51) and which is electrically grounded.

According to the fifth aspect of the present invention, the liquid which flows out of the flow-in side guide member (51) is further guided to the flow-out side guide member (53). Here, the flow-out side guide member (53) is grounded while a positive voltage or a negative voltage is applied to the first electrode (44). Thus, if a positively-charged liquid is sprayed from the first electrode (44) and this liquid flows into the flow path of the flow-out side guide member (53), the liquid is attracted to the inside wall surface of the flow-out side guide member (53) due to Coulomb force. After the small droplets successively adhere to the inside wall surface of the flow-out side guide member (53), these droplets aggregate. Thus, the liquid which has aggregated can flow down in a predetermined direction due to its own weight.

The sixth aspect of the present invention is that the liquid transfer device of the second aspect includes: a flow-in pipe (51) through which the liquid sprayed from the first electrode (44) flows and to which a voltage having a same electric potential as the voltage applied to the first electrode (44) is applied; a flow-out pipe (53) through which the liquid that flow out of the flow-in pipe (51) flows and which is electrically grounded; and an insulating discharge side connecting pipe (52) for connecting between the flow-in pipe (51) and the flow-out pipe (53).

According to the sixth aspect of the present invention, the liquid sprayed from the first electrode (44) flows through the flow-in pipe (51). Since a voltage having the same electric potential as the voltage applied to the first electrode (44) is applied to the flow-in pipe (51), positively- or negatively-charged small droplets can be prevented from adhering to the inside wall of the flow-in pipe (51). The liquid which flows out of the flow-in pipe (51) as described in the above flows through the discharge side connecting pipe (52) into the flow-out pipe (53). The flow-out pipe (53) is grounded, and thus, the positively- or negatively-charged small droplets are attracted to the inside wall of the flow-out pipe (53) due to Coulomb force. As a result, the small droplets successively adhere to the inside wall of the flow-out pipe (53) and aggregate. Here, in the present invention, the flow-in pipe (51) and the flow-out pipe (53) are connected to each other by the insulating discharge side connecting pipe (52). Thus, even when a positive voltage or a negative voltage is applied to the flow-in pipe (51), the discharge side connecting pipe (52) can prevent a current from flowing from the flow-in pipe (51) to the flow-out pipe (53).

The seventh aspect of the present invention is that any one of the liquid transfer devices of the first to sixth aspects includes an insulating reservoir side connecting pipe (43) for connecting between the reservoir (30) and the first electrode (44).

According to the seventh aspect of the present invention, the reservoir (30) and the first electrode (44) are connected to each other through the insulating reservoir side connecting pipe (43). Thus, even when a predetermined voltage is applied to the first electrode (44), the reservoir side connecting pipe (43) can prevent a current from flowing from the first electrode (44) to the reservoir (30).

The eighth aspect of the present invention is that in any one of the liquid transfer devices of the first to seventh aspects, the one end of the first electrode (44) communicates with a lower portion of the reservoir (30), and the other end of the first electrode (44) is open at a level equal to or lower than a bottom of the reservoir (30).

According to the eighth aspect of the present invention, one end of the first electrode (44) communicates with a lower portion of the reservoir (30). Thus, the liquid in the reservoir (30) can be transferred into the first electrode (44) due to the head of the liquid stored in the reservoir (30). On the other hand, the other end of the first electrode (44) is open at the level equal to or lower than the bottom of the reservoir (30). Thus, when the liquid is transferred from the reservoir (30) into the first electrode (44), the first electrode (44) is filled with this liquid to its open end. Thus, by creating an electric field at a location close to the open end of the first electrode (44), the liquid at the location close to the open end can be smoothly sprayed and transferred.

The ninth aspect of the present invention is an air conditioner including a heat exchanger (27) for cooling air, a reservoir (30) for storing a condensed water generated from the air cooled by the heat exchanger (27), and a liquid transfer device (40) for transferring and discharging the condensed water in the reservoir (30). Any one of the liquid transfer devices of the first to eighth aspects of the present invention is used as a liquid transfer device of the air conditioner.

According to the ninth aspect of the present invention, a condensed water generated from air when the air is cooled by the heat exchanger (27) is stored in the reservoir (30). In other words, the reservoir (30) constitutes a drain pan for collecting the drain water generated at a location close to the heat exchanger (27). Here, in the present invention, the liquid stored in the reservoir (30) is transferred and discharged to the outside of the system by the liquid transfer device of the first to eighth aspects of the present invention.

The tenth aspect of the present invention is that in the air conditioner of the ninth aspect, a copper material is provided in the reservoir (30) so that a copper ion is liberated in the condensed water.

According to the tenth aspect of the present invention, a copper material is provided in the reservoir (30). If the copper material is submerged in the condensed water, copper ions are liberated from the copper material into the condensed water. The copper ions suppress the proliferation of bacteria in the condensed water and, consequently, reduce generation of slime due to the proliferation of the bacteria. As a result, a clogging of the first electrode (44) with a bacteria-induced solid matter can be avoided.

The eleventh aspect of the present invention is that in the air conditioner of the tenth aspect, a positive voltage is applied to the first electrode (44) from the power source (60), and the second electrode (45) is electrically grounded.

According to the eleventh aspect of the present invention, since a positive voltage is applied to the first electrode (44), a positively-charged liquid is sprayed from the first electrode (44). Here, if a positive voltage is applied to the first electrode (44), the copper ions in the reservoir (30) are not likely to be attracted to the first electrode (44), i.e., a positive electrode. As a result, the copper ions are prevented from being sprayed from the first electrode (44) discharged to the outside of the system together with the liquid. In other words, in the present invention, the copper ions liberated from the copper material can be retained in the reservoir (30). Consequently, the bactericidal effect of the copper material can last for a long time.

### Effects of the invention

According to the present invention, a potential difference is applied between the first electrode (44) and the second electrode (45), and thereby, a liquid in the form of small droplets is sprayed from the first electrode (44), and the liquid is transferred while suspended in air. If the liquid is transferred in this way, the volume of the operational sound generated during the transfer of the liquid is decreased, compared to the case in which a motor is used to transfer the liquid. Thus, according to the liquid transfer device of the present invention, a noise generated during the transfer of the liquid can be reliably prevented. In addition, almost no current flows from a power source (60) when the liquid is transferred by utilizing Coulomb force as in this case. Thus, power consumption required to transfer the liquid can be significantly reduced as compared to the conventional devices in which a motor is used to transfer the liquid, thereby making it possible to improve energy saving characteristics of the liquid transfer device.

According to the second aspect of the present invention, a positive or negative voltage is applied to the first electrode (44) from the power source (60), and the second electrode (45) is electrically grounded. Thus, according to the present invention, a positively-charged liquid can be sprayed from the first electrode (44) and transferred. On the other hand, the second electrode (45) can be simply grounded, and therefore, the structure of the liquid spray device can be simplified.

According to the third aspect of the present invention, a flow-in side guide member (51) guides the liquid sprayed from the first electrode (44), and therefore, the liquid can be reliably transferred in a desired direction.

Specifically, according to the fourth aspect of the present invention, a voltage having the same electric potential as the voltage applied to the first electrode (44) is applied to the flow-in side guide member (51). Thus, according to the present invention, the small droplets of the liquid which flow through the flow path of the flow-in side guide member (51) can be effectively prevented from adhering to the wall surface of the flow-in side guide member (51). As a result, the liquid can be transferred in a predetermined direction while keeping the form of small droplets and suspended in air.

Further, according to the fifth aspect of the present invention, a flow-out side guide member (53) is grounded. Thus, according to the present invention, the small droplets of the liquid can be attracted to the inner surface of the flow-out side guide member (53) and aggregate. After having aggregated, the liquid can smoothly flow down due to its own weight, and can be discharged to the outside of the system.

According to the sixth aspect of the present invention, the flow-in pipe (51) and the flow-out pipe (53) are connected to each other by the insulating discharge side connecting pipe (52). Thus, according to the present invention, a current can be reliably prevented from flowing from the flow-in pipe (51) to the flow-out pipe (53) even when a positive or negative voltage is applied to the flow-in pipe (51).

Similarly, according to the seventh aspect of the present invention, the reservoir (30) and the first electrode (44) are connected to each other by the insulating reservoir side connecting pipe (43). Thus, according to the present invention, a current can be reliably prevented from flowing from the first electrode (44) to the reservoir (30) even when a positive or negative voltage is applied to the first electrode (44).

According to the eighth aspect of the present invention, one end of the first electrode (44) is connected to a lower portion of the reservoir (30), and the other end of the first electrode (44) is open at the level equal to or lower than the bottom of the reservoir (30). This structure enables the liquid in the reservoir (30) to be transferred to the other end of the first electrode (44) due to its own weight, and thereby, the liquid in the open end of the first electrode (44) can be reliably sprayed.

According to the ninth aspect of the present invention, any one of the first to eighth liquid transfer devices is used to drain water from an air conditioner. Thus, the volume of the operational sound of the drain pump and the power consumption of the same can be reduced, which consequently can achieve low-noise operation and improvement in energy saving characteristics of the air conditioner.

According to the tenth aspect of the present invention, a copper material is provided in the reservoir (30) so that copper ions are liberated in the drain water in the reservoir (30). This structure of the present invention can prevent generation of slime and prevent a solid matter from consolidating within the first electrode (44). As a result, stable operation of the liquid transfer device (40) can be ensured for a long time. In addition, since the generation of the slime is prevented, a foul odor from the reservoir (30) can be prevented, as well.

Specifically, according to the eleventh aspect of the present invention, a positive voltage is applied to the first electrode (44). Thus, according to the present invention, the copper ions liberated in the reservoir (30) are not likely to flow out of the reservoir (30) to the first electrode (44), and a high concentration of copper ions can be retained in the reservoir (30). Thus, the bactericidal effect of the copper material can last for a long time.

### Brief Description of Drawings

[FIG. 1] FIG. 1 is an oblique view showing the outer appearance of an indoor unit of an air conditioner according to an embodiment.
[FIG. 2] FIG. 2 is a longitudinal cross-sectional view of an indoor unit of an air conditioner according to an embodiment.
[FIG. 3] FIG. 3 is a plan view of a decorative panel of an indoor unit of an air conditioner according to an embodiment.
[FIG. 4] FIG. 4 is a schematic diagram of a liquid transfer device according to an embodiment.
[FIG. 5] FIG. 5 is a schematic diagram depicting an area close to a nozzle of a liquid transfer device according to an embodiment. FIG. 5(A) illustrates a state of liquid before spraying. FIG. 5(B) illustrates a state of liquid at the beginning of spraying.

### Description of Characters

- 10: air conditioner
- 27: indoor heat exchanger (heat exchanger)
- 30: drain pan (reservoir)
- 40: drain device (liquid transfer device)
- 43: first insulating pipe (reservoir side connecting pipe)
- 44: nozzle electrode (first electrode)
- 45: ring electrode (second electrode)
- 51: flow-in pipe (flow-in side guide member)
- 52: second insulating pipe (discharge side connecting pipe)
- 53: flow-out pipe (flow-out side guide member)
- 60: power source

### Example Embodiments

Embodiments of the present invention are hereinafter described in detail based on the drawings. An air conditioner (10) of the present embodiment is for room-air heating and cooling. The air conditioner (10) includes an indoor unit (20) mounted in the ceiling of a room. The indoor unit (20) is connected to an outdoor unit (not shown) via a refrigerant pipe, and a refrigerant circuit for providing a vapor compression type refrigeration cycle is configured in the air conditioner (10). A refrigerant circuit of the outdoor unit is provided with element devices, such as a compressor, an outdoor heat exchanger, and an expansion valve.

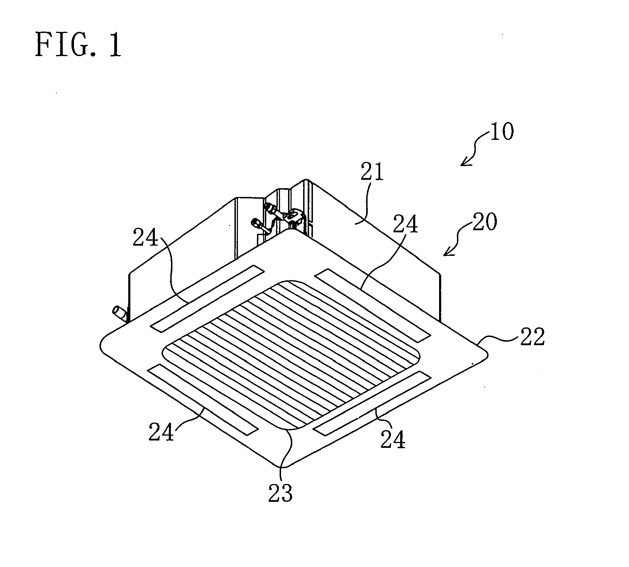

As shown in FIG. 1, the indoor unit (20) includes a casing body (21) and a decorative panel (22). The casing body (21) is like a flat box whose bottom is open. The decorative panel (22) is attached to the casing body (21) so as to cover the open bottom of the casing body (21). The decorative panel (22) has an air inlet (23) in the center. The decorative panel (22) has four enlongated air outlets (24) along the periphery of the air inlet (23).

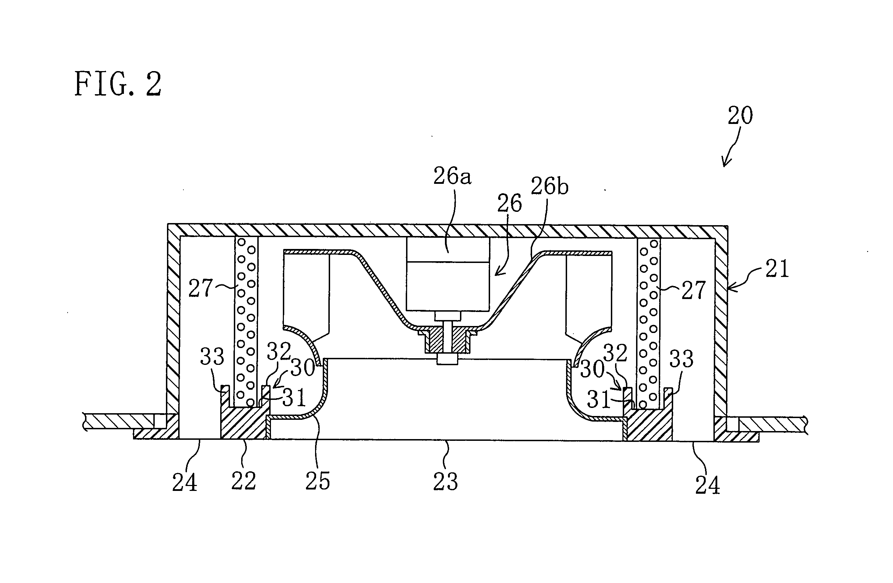

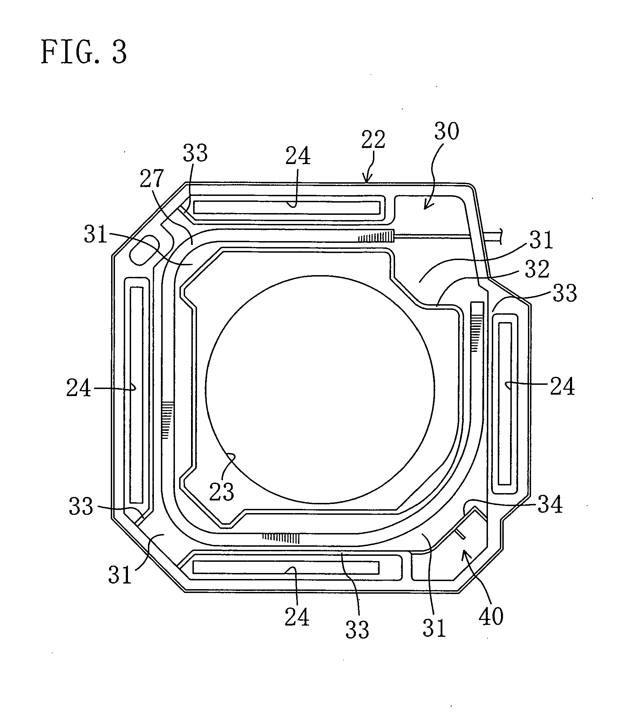

As shown in FIG. 2, a bell-mouth (25), an indoor fan (26), an indoor heat exchanger (27), and a drain pan (30) are accommodated within the casing body (21). The bell-mouth (25) is like a cylinder whose bottom is connected to the air inlet (23). The internal diameter of the bell-mouth (25) becomes wider as it gets closer to the bottom. The indoor fan (26) is located above the bell-mouth (25). The indoor fan (26) constitutes a turbofan. The indoor fan (26) includes a fan motor (26a) and a blade (26b) connected to the drive shaft of the fan motor (26a). When the indoor fan (26) is put into operation, room air is drawn into the casing body (21) through the air inlet (23) and the bell-mouth (25). The room air is dispersed radially outward by the blade (26b) within the casing body (21). The indoor heat exchanger (27) constitutes a cross fin type heat exchanger. As shown in FIG. 3, the indoor heat exchanger (27) is located so as to stand on the upper side of the decorative panel (22) and surround the air inlet (23).

The drain pan (30) is formed on the upper side of the decorative panel (22). The drain pan (30) includes a bottom plate (31), an inside partition plate (32), an outside partition plate (33), and drain side partition plate (34). The bottom plate (31) is formed on the upper side of the decorative panel (22) and extends across the bottom portion of the indoor heat exchanger (27). The inside partition plate (32) is provided at the inner periphery of the bottom plate (31). The inside partition plate (32) is positioned radially outward from the air inlet (23) to surround the air inlet (23), and partitions between the indoor heat exchanger (27) and the air inlet (23). The outside partition plate (33) is provided at the outer periphery of the bottom plate (31). The outside partition plate (33) is positioned radially outward from the indoor heat exchanger (27) to surround the indoor heat exchanger (27), and partitions between each air outlet (24) and the indoor heat exchanger (27). The drain side partition plate (34) is provided close to a corner of a predetermined portion (lower right portion of FIG. 3) of the decorative panel (22). The drain side partition plate (34) extends along the indoor heat exchanger (27) such that a drain space (S) is created at the outside of the drain side partition plate (34).

The drain pan (30) having the above-described structure constitutes a reservoir for storing a condensed water (drain water) generated from the air cooled by the indoor heat exchanger (27). The inside of the drain pan (30), i.e., inside walls of the bottom plate (31) and the partition plates (32, 33, 34), is coated with a copper material. In other words, a copper member for liberating copper ions in the stored drain water is provided in the drain pan (30). In addition, the bottom plate (31) of the drain pan (30) is inclined so that the stored drain water can flow down to the drain side partition plate (34).

A drain device (40) is provided in the drain space (S). The drain device (40) constitutes a liquid transfer device for transferring the drain water stored in the drain pan (30) and discharging the drain water to the outside the system.

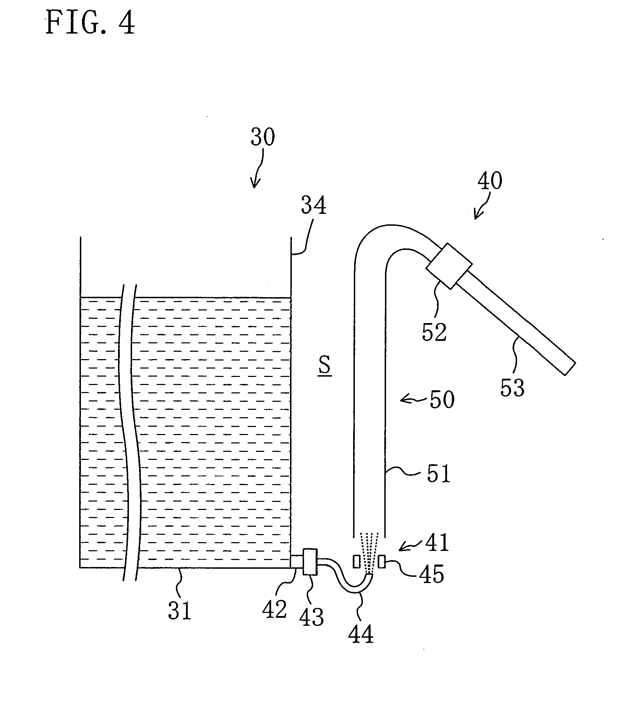

As shown in FIG. 4, the drain device (40) includes a spray part (41) and a transfer part (50). The spray part (41) includes an intake pipe (42), a first insulating pipe (43), a nozzle electrode (44), and a ring electrode (45). One end of the intake pipe (42) passes through the drain side partition plate (34) and communicates with the inside of the drain pan (30). The one end of the intake pipe (42) is open at approximately the same level as the bottom of the drain pan (30). One end of the first insulating pipe (43) is connected to the other end of the intake pipe (42). The first insulating pipe (43) is made of an insulating material, such as an insulating resin and an insulator. The first insulating pipe (43) constitutes a reservoir side connecting pipe for connecting between the drain pan (30) and the nozzle electrode (44).

One end of the nozzle electrode (44) is connected to the other end of the first insulating pipe (43). The nozzle electrode (44) is curved downward to form a "U" shape. The other end of the nozzle electrode (44) points upward and is open. The nozzle electrode (44) is made of a conductive material, such as stainless. The other end of the nozzle electrode (44) is open at the level equal to or lower than the bottom of the reservoir (30). The ring electrode (45) is positioned at a place corresponding to the nozzle electrode (44) such that the ring electrode (45) faces the other end of the nozzle electrode (44). The ring electrode (45) has an annular shape and is coaxial with the center of the other end of the nozzle electrode (44). The ring electrode (45) is made of a conductive material, such as stainless.

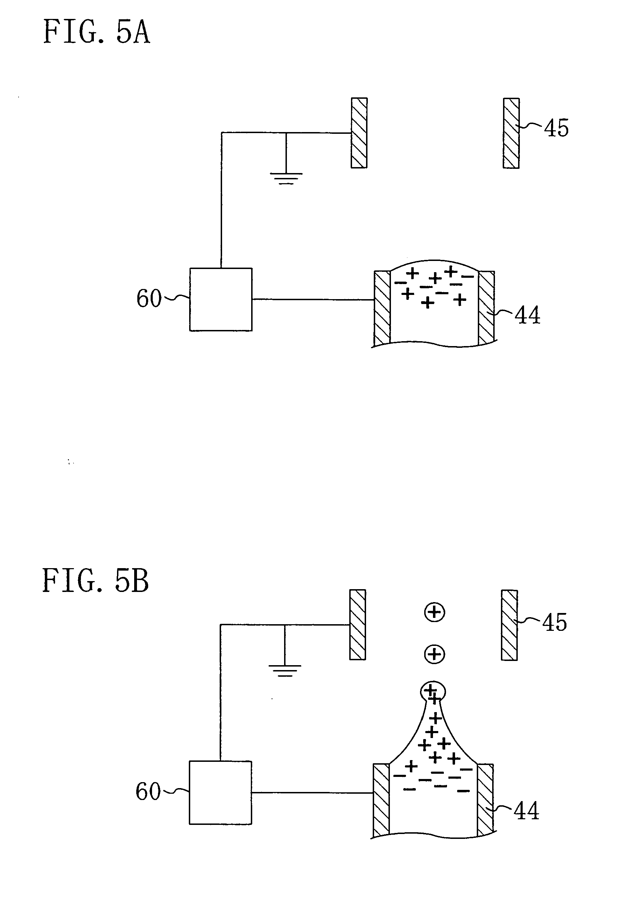

The drain device (40) includes the power source (60) as shown in FIG. 5. The nozzle electrode (44) is connected to a positive electrode of the power source (60) via electric wiring. In other words, the nozzle electrode (44) constitutes a first electrode to which a positive voltage is applied. On the other hand, the ring electrode (45) is connected to the ground of the power source (60) via electric wiring. In other words, the ring electrode (45) constitutes a second electrode which is electrically grounded. In this way, a potential difference is applied between the nozzle electrode (44) and the ring electrode (45) of the spray part (41) by the power source (60). As a result, a transfer operation in which the drain water in the drain pan (30) is sprayed from the nozzle electrode (44) and transferred is carried out at the spray part (41). Details of the transfer operation are described later.

The transfer part (50) includes a flow-in pipe (51), a second insulating pipe (52), and a flow-out pipe (53). The flow-in pipe (51) is provided above the other end (i.e., an open end) of the nozzle electrode (44). The flow-in pipe (51) extends vertically upward from its bottom and curves obliquely downward at its top portion. The flow-in pipe (51) constitutes a flow-in side guide member which forms a flow path for guiding upward the drain water sprayed from the nozzle electrode (44). Moreover, the flow-in pipe (51) is connected to the above-described positive electrode of the power source (60) via electric wiring. This means that a voltage having the same electric potential as the voltage applied to the nozzle electrode (44) is applied to the flow-in pipe (51).

One end of the second insulating pipe (52) is connected to the top portion of the flow-in pipe (51). The second insulating pipe (52) is made of an insulating material, such as an insulating resin and insulator. The second insulating pipe (52) constitutes an insulating discharge side connecting pipe for connecting between the flow-in pipe (51) and the flow-out pipe (53). The flow-out pipe (53) is connected to the other end of the second insulating pipe (52). The flow-out pipe (53) extends obliquely downward and constitutes a flow-out side guide member for guiding downward the liquid which flows out of the flow-in pipe (51). Moreover, the flow-out pipe (53) is connected to the ground of the power source (60) via electric wiring. This means that the flow-out pipe (53) is electrically grounded. The flow-out end of the flow-out pipe (53) communicates with the outside of the casing body (21) and is connected to a flow path for discharging the drain water (not shown).

### - Operation Of Air Conditioner -

Cooling operation of the air conditioner (10) according to the present embodiment is described. When the compressor of the outdoor unit comes into operation during the cooling operation, a refrigerant cycle in which the outdoor heat exchanger functions as a condenser and in which the indoor heat exchanger (27) of the indoor unit (20) functions as an evaporator, is provided.

When the indoor fan (26) is put into operation in this state, room air is drawn into the casing body (21) through the air inlet (23). This air passes through the bell-mouth (25) and is dispersed radially outward by the indoor fan (26). As a result, the air goes through the indoor heat exchanger (27). In the indoor heat exchanger (27), a refrigerant which flows in the indoor heat exchanger (27) absorbs heat from the air and evaporates. As a result, the air is cooled by the refrigerant. The air cooled by the indoor heat exchanger (27) flows along the outer periphery in the casing body (21), and is supplied to the indoor space through the air outlets (24). The supplied air accomplishes the cooling of the indoor space.

### - Transfer Of Drain Water -

When the air is cooled by the indoor heat exchanger (27) in the above cooling operation, moisture included in the air is condensed and results in a drain water near the indoor heat exchanger (27). The drain water falls in drops and is collected in the drain pan (30). According to the present embodiment, the drain water collected in the drain pan (30) in this manner is discharged to the outside of the system in the following matter.

As the amount of the drain water stored in the drain pan (30) increases as shown in FIG. 4, the drain water in the drain pan (30) flows out to the intake pipe (42) due to its own weight (head of water). The drain water flows through the first insulating pipe (43) to the nozzle electrode (44), and is led to the tip (open end) of the nozzle electrode (44). As a result, as shown in FIG. 5(A), the drain water at the tip of the nozzle electrode (44) is kept at the tip of the nozzle electrode (44) due to surface tension.

In this state, if a potential difference of several thousand volts is applied between the nozzle electrode (44) and the ring electrode (45) from the power source (60), an electric field is creased at the tip of the nozzle electrode (44). If the electric field is created at the tip of the nozzle electrode (44) as described in the above, the drain water at the tip of the nozzle electrode (44) is polarized, and positive electric charges gather at the air-liquid interface of the drain water. As a result, the air-liquid interface at the tip of the nozzle electrode (44) is drawn up to have a conical shape, and part of the liquid is pulled apart from the top of the conical air-liquid interface as droplets (see FIG. 5(B)). The droplets of the drain water are positively charged, and therefore, are attracted to the ring electrode (45) due to Coulomb force. As a result, small droplets of the drain water are sprayed upward from the nozzle electrode (44).

The sprayed drain water moves upward while suspended in air and keeping the form of small droplets, and flows in the flow-in pipe (51) as shown in FIG. 4. Here, the same electric potential as the electric potential applied to the nozzle electrode (44), that is a positive voltage, is applied to the flow-in pipe (51). This causes the drain water in the flow-in pipe (51) to be repulsive to the inside wall of the flow-in pipe (51) and move further upward while suspended in air. In other words, the drain water in the flow-in pipe (51) is affected by Coulomb force in a direction separating from the wall surface of the flow-in pipe (51), and thus, the drain water is transferred upward while keeping the form of small droplets without adhering to the wall surface of the flow-in pipe (51). Consequently, the sprayed drain water can be smoothly guided upward in the flow-in pipe (51).

The drain water which flows out of the flow-in pipe (51) as described in the above, flows through the second insulating pipe (52) into the flow-out pipe (53). Here, the flow-out pipe (53) is electrically grounded. Thus, the positively-charged drain water is successively attracted to the inside wall of the flow-out pipe (53). As a result, the drain water in the form of small droplets aggregates on the inside wall of the flow-out pipe (53). After having aggregated, the drain water flows down smoothly due to its own weight, and is drained to the outside of the system (such as the outdoors).

Incidentally, in the drain pan (30), so-called slime may be generated in the drain water because of proliferation of bacteria in the remaining drain water. If the slime is generated, the nozzle electrode (44) may be clogged with a bacteria-induced solid matter, and continuous transfer of the drain water as described in the above may not be possible. In addition, the slime may generate a foul odor within the drain pan (30). In view of this, a copper material is provided within the drain pan (30) in the present embodiment.

In this structure, copper ions are liberated from the copper material into the drain water in the drain pan (30). The copper ions suppress the proliferation of bacteria in the condensed water and, consequently, also reduce generation of slime due to the proliferation of bacteria. As a result, a solid matter which clogs the nozzle electrode (44) can be avoided. At the same time, a foul odor due to the generation of the slime can be reduced. Further, since a positive voltage is applied to the nozzle electrode (44), the copper ions liberated in the drain water are affected by Coulomb force, according to which the copper ions are repulsive to the positive nozzle electrode (44). Thus, the copper ions are prevented from flowing out through the nozzle electrode (44) together with the drain water. As a result, the copper ions are retained in the drain water in the drain pan (30), and thus, the bactericidal effect of the copper material can last for a long time.

### - Effect in Embodiments -

According to the above embodiment, a potential difference is applied between the first electrode (44) and the second electrode (45) from the power source (60), and thereby, the drain water in the form of small droplets is sprayed from the nozzle electrode (44), and the drain water is transferred upward while suspended in air. If the liquid is transferred in this way, the volume of the operational sound generated during the transfer of the liquid is decreased, compared to conventional liquid transfer devices in which a motor is used to transfer the liquid. Thus, according to the above embodiment, a noise generated during the transfer of the liquid can be reliably prevented. In addition, almost no current flows from the power source (60) when the liquid is transferred in this manner. Thus, power consumption required to transfer the liquid can be significantly reduced as compared to conventional devices in which a motor is used to transfer the liquid, thereby making it possible to improve energy saving characteristics of the liquid transfer device.

Moreover, in the above embodiment, a voltage having the same electric potential as the voltage applied to the first electrode (44), that is a positive voltage, is applied to the flow-in pipe (51) for guiding the drain water upward. Thus, according to the above embodiment, small droplets of the liquid can be prevented from adhering to the inside wall of the flow-in pipe (51), and these droplets can be transferred upward while reliably suspended in air.

At the same time, in the above embodiment, the flow-out pipe (53) is grounded so that the drain water in the form of small droplets can adhere to the inside wall surface of the flow-out pipe (53) and aggregate. Thus, the drain water which has aggregated in the flow-out pipe (53) can flow down due to its own weight, and therefore, the drain water can be smoothly discharged to the outside of the system.

Further, the flow-in pipe (51) and the flow-out pipe (53) are connected to each other by the second insulating pipe (52), and thus, even when a positive voltage is applied to the flow-in pipe (51), a current does not flow from the flow-in pipe (51) to the flow-out pipe (53). Similarly, the drain pan (30) and the nozzle electrode (44) are connected to each other by the first insulating pipe (43), and thus, even when a positive voltage is applied to the nozzle electrode (44), a current does not flow from the nozzle electrode (44) to the drain pan (30).

Moreover, in the above embodiment, a copper material is provided in the drain pan (30) so that copper ions are liberated in the drain water in the drain pan (30). Generation of slime can thus be prevented by the copper ions, and a solid matter which clogs the nozzle electrode (44) can be avoided. As a result, stable operation of the drain device (40) can be ensured for a long time. In addition, since the generation of the slime is prevented, a foul odor from the drain pan (30) can be prevented, as well. Further, the copper ions liberated in the drain pan (30) are repulsive to the positive nozzle electrode (44), and therefore, the copper ions can be prevented from flowing out through the nozzle electrode (44). As a result, a high concentration of the copper ions can be retained in the drain pan (30), and the bactericidal effect of the copper material can last for a long time.

### «Other Embodiments»

The following structures may be applied in the embodiment described in the above.

According to the above embodiment, a positive voltage is applied to the nozzle electrode (44) while the ring electrode (45) is grounded. However, a negative voltage may be applied to the nozzle electrode (44) while the ring electrode (45) is grounded. In this case, a negatively-charged drain water is sprayed from the nozzle electrode (44). In this case, the drain water can be prevented from adhering to the inside wall of the flow-in pipe (51) by applying a negative voltage to the flow-in pipe (51), as well as to the nozzle electrode (44). Applying a potential difference between the nozzle electrode (44) and the ring electrode (45) by applying a positive voltage to the nozzle electrode (44) and a negative voltage to the ring electrode (45) may be possible, or any other structure that can apply a potential difference between the electrodes (44, 45) may be possible.

According to the above embodiment, one nozzle electrode (44) communicates with the drain pan (30) to spray and transfer the drain water from the nozzle electrode (44). However, a plurality of nozzle electrodes (44) may communicate with the drain pan (30) to spray the drain water from the respective nozzle electrodes (44) simultaneously. In this case, the transfer parts (50) may be provided so that each of the transfer part (50) may correspond to its associated nozzle electrode (44), or a flow path for guiding the sprayed drain water may be provided such that the flow path is branched and connected to the nozzle electrodes (44).

Further, in the above embodiment, a filter for capturing a solid matter may be provided at a location in the flow path of a drawn water from the intake end of the intake pipe (42) to the intake end of the nozzle electrode (44). A clogging of the nozzle electrode (44) can be effectively avoided by capturing a solid matter by the filter.

In the above embodiment, the drain device (40) is used as a drain device for the air conditioner (10). However, as a matter of course, the drain device (40) can be used for purposes other than the above, as long as the drain device (40) is used to transfer a liquid.

The embodiments described in the above are essentially preferable examples which are not intended to limit the present invention, its application, or its range of use.

### Industrial Applicability

As described in the above, the present invention is useful as a liquid transfer device for transferring a liquid in the reservoir, and as an air conditioner including the liquid transfer device.

## Claims

1. A liquid transfer device for transferring a liquid in a reservoir (30), comprising:
a tubular first electrode (44) whose one end communicates with the reservoir (30) and whose other end is open;
a second electrode (45) provided at a location corresponding to the other end of the first electrode (44); and
a power source (60) for applying an potential difference between the first electrode (44) and the second electrode (45), thereby creating an electric field at a location close to the other end of the first electrode (44), wherein
the liquid in the reservoir (30) is sprayed from the other end of the first electrode (44) due to the electric field, and thereby the liquid is transferred.

2. The liquid transfer device of claim 1, wherein
a positive voltage or a negative voltage is applied to the first electrode (44) from the power source (60), and
the second electrode (45) is electrically grounded.

3. The liquid transfer device of claim 2, comprising a flow-in side guide member (51) which forms a flow path for guiding the liquid sprayed from the first electrode (44).

4. The liquid transfer device of claim 3, wherein a voltage having a same electric potential as the voltage applied to the first electrode (44) is applied to the flow-in side guide member (51).

5. The liquid transfer device of claim 3 or claim 4, comprising a flow-out side guide member (53) which forms a flow path for guiding the liquid that flows out of the flow-in side guide member (51) and which is electrically grounded.

6. The liquid transfer device of claim 2, comprising:
a flow-in pipe (51) through which the liquid sprayed from the first electrode (44) flows and to which a voltage having a same electric potential as the voltage applied to the first electrode (44) is applied;
a flow-out pipe (53) through which the liquid that flow out of the flow-in pipe (51) flows and which is electrically grounded; and
an insulating discharge side connecting pipe (52) for connecting between the flow-in pipe (51) and the flow-out pipe (53).

7. The liquid transfer device of claim 1, comprising an insulating reservoir side connecting pipe (43) for connecting between the reservoir (30) and the first electrode (44).

8. The liquid transfer device of claim 1, wherein the one end of the first electrode (44) communicates with a lower portion of the reservoir (30), and the other end of the first electrode (44) is open at a level equal to or lower than a bottom of the reservoir (30).

9. An air conditioner comprising: a heat exchanger (27) for cooling air; a reservoir (30) for storing a condensed water generated from the air cooled by the heat exchanger (27); and a liquid transfer device (40) for transferring and discharging the condensed water in the reservoir (30), wherein
the liquid transfer device (40) is any one of the liquid transfer devices of claim 1 to claim 8.

10. The air conditioner of claim 9, wherein a copper material is provided in the reservoir (30) so that a copper ion is liberated in the condensed water.

11. The air conditioner of claim 10, wherein
a positive voltage is applied to the first electrode (44) from the power source (60), and
the second electrode (45) is electrically grounded.
